# EUROPEAN PATENT APPLICATION

(11) **EP 2 747 419 A2**
(43) Date of publication of application: **25.06.2014**
(21) Application number: 13179320.0
(22) Date of filing: 05.08.2013
(51) Int. Cl.: H04N 5/235

(54) **Brightness-adjusting system and method thereof and electronic device using same**

(30) Priority: 24.12.2012 TW 101149475
(71) Applicant: Ingrasys Technology Inc., Taoyuan (TW)
(72) Inventor: Sun, Yu-Hung, Taoyuan (TW)
(74) Representative: Gray, John James

(57) **Abstract**

A brightness-adjusting method is provided. The method includes the following steps: divide the first image into a plurality of sub-images; acquire an average brightness value of each sub-image; detect whether or not the average brightness value of each sub-image falls within a predetermined brightness value range; determine the driving controller associated with the light-emitting unit associated with the sub-image that has an average brightness value that does not fall within the predetermined brightness value range; control the determined driving controller to adjust current flowing to the light-emitting unit to adjust the illumination value of the light-emitting unit; and control the lens module to capture a second image of the object after the driving controller has adjusted the current flowing to the light-emitting unit. A brightness-adjusting system and an electronic device using the same are also provided.

## Description

### BackGround

### Technical Field

The present disclosure relates to adjusting systems, and particularly to a brightness-adjusting system and a method thereof, and an electronic device using same.

### Description of Related Art

Cameras connected to electronic devices through USB ports or embedded therein are used to capture images. However, the quality of the images is easily influenced by the environment, such as ambient light.

Therefore, what is needed is a brightness-adjusting system to overcome the above described limitations.

### BRIEF DESCRIPTION OF THE DRAWING

FIG. 1 is a schematic diagram of a brightness-adjusting system in accordance with an exemplary embodiment.

FIG. 2 is a flowchart of a brightness-adjusting method implemented by the brightness-adjusting system of FIG. 1, in accordance with an exemplary embodiment.

### DETAILED DESCRIPTION

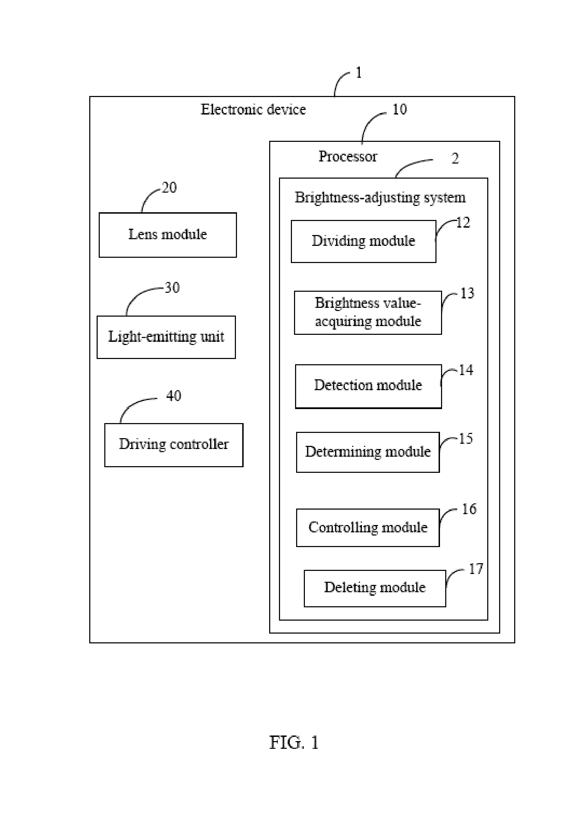

Referring to FIG. 1, a brightness-adjusting system 2 being run in an electronic device 1 is provided. The electronic device 1 includes a lens module 20, a number of light-emitting units 30, a number of driving controllers 40, and a processor 10. Each driving controller 40 is electrically connected to one of the light-emitting units 30, and is used to adjust current flowing to the light-emitting units 30, thereby adjusting an illumination value of the light-emitting units 30. The lens module 20 captures a first image of an object in response to a user operation. The first image is composed of a number of sub-images. Each of the light-emitting units 30 is associated with one of the sub-images, and is used to provide assistant illumination for the lens module 20 to capture images, thereby improving the quality of the image. In one embodiment, the light-emitting units 30 are flash lamps.

The processor 10 executes instructions to perform functions of a dividing module 12, a determining module 15, a brightness value-acquiring module 13, a detection module 14, and a controlling module 16.

The dividing module 12 divides the first image into a number of sub-images. The brightness value-acquiring module 13 acquires an average brightness value of each sub-image. The detection module 14 detects whether or not the average brightness value of each sub-image falls within a predetermined brightness value range. If a sub-image has an average brightness value that falls outside a predetermined brightness value range, the determining module 15 determines which driving controller 40 controls the light-emitting unit 30 associated with the sub-image that has an average brightness value that does not fall within the predetermined brightness value range. The controlling module 16 controls the determined driving controller 40 to adjust the current flowing to the light-emitting unit 30 to adjust the illumination value of the light-emitting unit 30. The controlling module 16 further controls the lens module 20 to capture a second image of the object after the driving controller 40 has adjusted the current flowing to the light-emitting unit 30. The controlling module 16 does not do any operation when the average brightness value of each sub-image falls within the predetermined brightness value range.

The controlling module 16 controls the driving controller 40 to increase the current flowing to a light-emitting unit 30 when the average brightness value of the corresponding sub-image is lower than the predetermined brightness value range, and controls the driving controller 40 to decrease the current flowing to a light-emitting unit 30 when the average brightness value of the corresponding sub-image is greater than the predetermined brightness value range.

Each sub-image includes a number of pixels. The brightness value-acquiring module 13 acquires the brightness value of each pixel of the sub-image, and calculates the average brightness value of the number of pixels. The average brightness value of the number of pixels is the average brightness value of the sub-image.

The processor 10 further includes a deleting module 17. The deleting module 17 deletes the first image after the second image is captured by the lens module 20, thereby displaying the second image to a user.

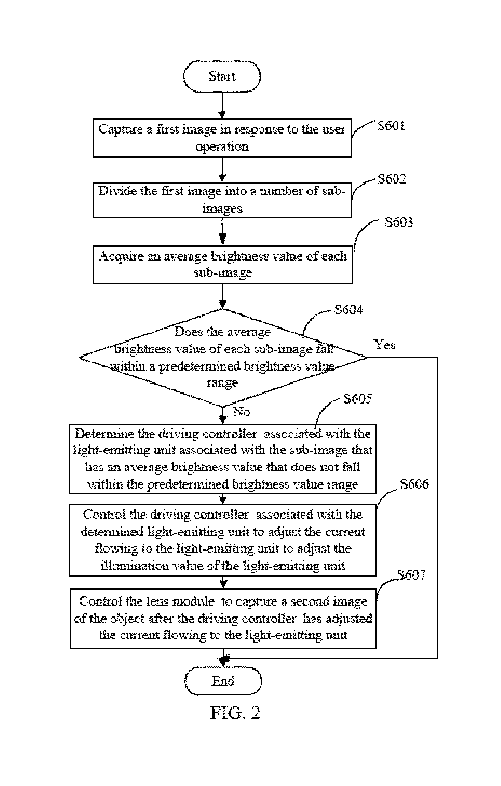

FIG. 2 is a flowchart of a brightness-adjusting method implemented by the brightness-adjusting system of FIG. 1, in accordance with an exemplary embodiment.

In step S601, the lens module 20 captures the first image in response to the user operation.

In step S602, the dividing module 12 divides the first image into the number of sub-images.

In step S603, the brightness value-acquiring module 13 acquires an average brightness value of each sub-image.

In step S604, the detection module 14 detects whether or not the average brightness value of each sub-image falls within a predetermined brightness value range; if yes, the procedure goes to ends; if no, the procedure goes to step S605.

In step S605, the determining module 15 determines the driving controller 40 associated with the light-emitting unit 30 associated with the sub-image that has an average brightness value that does not fall within the predetermined brightness value range.

In step S606, the controlling module 16 controls the driving controller 40 associated with the determined light-emitting unit 30 to adjust the current flowing to the light-emitting unit 30 to adjust the illumination value of the light-emitting unit 30.

In step S607, the controlling module 16 controls the lens module 20 to capture a second image of the object after the driving controller 40 has adjusted the current flowing to the light-emitting unit 30.

The method further includes a sub step: the deleting module 17 deletes the first image captured by the lens module 20 after the second image is captured by the lens module 20.

Although various embodiments have been specifically described, the disclosure is not to be construed as being limited thereto. Various changes or modifications may be made to the embodiments without departing from the scope and spirit of the disclosure.

## Claims

1. A brightness-adjusting system being run in an electronic device, wherein the electronic device comprises a lens module, a plurality of light-emitting units, and a plurality of driving controllers, the lens module is configured to capture a first image of an object in response a user operation, the plurality of light-emitting units are configured to provide assistant illumination for the lens module to capture image, each of the plurality of driving controllers is electrically connected to one of the plurality of light-emitting units, and is configured to adjust current flowing to the light-emitting unit to adjust an illumination value of the light-emitting unit, the first image is composed of a plurality of sub-images, each of which is associated with one of the plurality of light-emitting units, the system comprising:
one or more processors; and
a plurality of modules to be executed by the one or more processors, wherein
the plurality of modules comprises:
a dividing module configured to divide the first image into a plurality of sub-images;
a brightness value-acquiring module configured to acquire an average brightness value of each sub-image;
a detection module configured to detect whether or not the average brightness value of each sub-image falls within a predetermined brightness value range;
the determining module further configured to determine the driving controller associated with the light-emitting unit associated with the sub-image that has the average brightness value that does not fall within the predetermined brightness value range; and
a controlling module configured to control the determined driving controller to adjust current flowing to the light-emitting unit to adjust the illumination value of the light-emitting unit,
wherein the controlling module is further configured to control the lens module to capture a second image of the object after the driving controller has adjusted the current flowing to the light-emitting unit.

2. The brightness-adjusting system as described in claim 1, wherein each sub-image comprises a plurality of pixels, the brightness value-acquiring module is configured to acquire the brightness value of each pixel of the sub-image, and calculate the average brightness value of the plurality of pixels as the average brightness value of the sub-image.

3. The brightness-adjusting system as described in claim 1 or 2, wherein the plurality of modules further comprises:
a deleting module configured to delete the first image after the second image is captured by the lens module.

4. The brightness-adjusting system as described in claim 1, 2 or 3, wherein the controlling module is configured to control the driving controller to increase the current flowing to the light-emitting unit when the average brightness value of the sub-image is lower than the predetermined brightness value range, and control the driving controller to decrease the current flowing to the light-emitting unit when the average brightness value of the sub-image is greater than the predetermined brightness value range.

5. An electronic device with a brightness-adjusting function comprising:
a plurality of light-emitting units configured to provide illumination for the lens module to capture image;
a lens module configured to capture a first image of an object in response a user operation; wherein the first image is composed of a plurality of sub-images, each of which is associated with one of the light-emitting units;
a plurality of driving controllers, wherein each of the driving controllers is electrically connected to one of the light-emitting units, and is configured to adjust current flowing to the light-emitting unit to adjust an illumination value of the light-emitting unit; and
a processor configured to divide the first image into a plurality of sub-images,
detect whether or not the average brightness value of the each sub-image falls within a predetermined brightness value range, determine the driving controller associated with the light-emitting unit associated with the sub-image that has the average brightness value that does not fall within the predetermined brightness value range, control the determined driving controller to adjust current flowing to the light-emitting unit to adjust the illumination value of the light-emitting unit, and control the lens module to capture a second image of the object after the driving controller has adjusted the current flowing to the light-emitting unit.

6. The electronic device with a brightness-adjusting function as described in claim 5, wherein each sub-image comprises a plurality of pixels, the processor is configured to acquire the brightness value of each pixel of the sub-image, and calculate the average brightness value of the plurality of pixels as the average brightness value of the sub-image.

7. The electronic device with a brightness-adjusting function as described in claim 5 or 6, wherein the processor is further configured to delete the first image after the second image is captured by the lens module.

8. The electronic device with a brightness-adjusting function as described in claim 5, 6 or 7, wherein the processor is configured to control the driving controller to increase the current flowing to the light-emitting unit when the average brightness value of the sub-image is lower than the predetermined brightness value range, and control the driving controller to decrease the current flowing to the light-emitting unit when the average brightness value of the sub-image is greater than the predetermined brightness value range.

9. A brightness-adjusting method being run in an electronic device, wherein the electronic device comprises a lens module, a plurality of light-emitting units, and a plurality of driving controllers, the lens module is configured to capture a first image of an object in response a user operation, the plurality of light-emitting units are configured to provide illumination for the lens module to capture image, each of the driving controllers is electrically connected to one of the light-emitting units, and is configured to adjust current flowing to the light-emitting unit to adjust an illumination value of the light-emitting unit, the first image is composed of a plurality of sub-images, each of which is associated with one of the light-emitting units, the method comprising:
dividing the first image into a plurality of sub-images;
acquiring an average brightness value of each sub-image;
detecting whether or not the average brightness value of the each sub-image falls with a predetermined brightness value range;
determining the driving controller associated with the light-emitting unit associated with the sub-image that has the average brightness value that does not fall within the predetermined brightness value range;
controlling the determined driving controller to adjust current flowing to the light-emitting unit to adjust the illumination value of the light-emitting unit; and
controlling the lens module to capture a second image of the object after the driving controller has adjusted the current flowing to the light-emitting unit.

10. The brightness-adjusting method as described in claim 9, wherein each sub-image comprises a plurality of pixels, the method further comprises:
acquiring the brightness value of each pixel of the sub-image; and
calculating the average brightness value of the plurality of pixels as the average brightness value of the sub-image.

11. The brightness-adjusting method as described in claim 9 or 10, further comprising:
deleting the first image after the second image is captured by the lens module.

12. The brightness-adjusting method as described in claim 9, 10 or 11, further comprising:
controlling the driving controller to increase the current flowing to the light-emitting unit when the average brightness value of the sub-image is lower than the predetermined brightness value range; and
controlling the driving controller to decrease the current flowing to the light-emitting unit when the average brightness value of the sub-image is greater than the predetermined brightness value range.
